# EUROPEAN PATENT SPECIFICATION

(11) **EP 2 948 900 B1**
(45) Date of publication and mention of the grant of the patent: **06.03.2019**
(21) Application number: 13872943.9
(22) Date of filing: 25.01.2013
(51) Int. Cl.: G06K 19/06, G06K 7/10, G06F 17/21

(54) **MODIFYING DATA-BEARING IMAGES**
MODIFIZIERUNG DATENHALTIGER BILDER
MODIFICATION D'IMAGES PORTANT DES DONNÉES

(43) Date of publication of application: 02.12.2015
(73) Proprietor: Hewlett-Packard Development Company, L.P., Houston, Texas 77070 (US)
(72) Inventor: SIMSKE, Steven J., Ft. Collins, Colorado 80528-9544 (US); VANS, Marie, Ft. Collins, Colorado 80528-9544 (US); LOUCKS, Bradley A, Ft. Collins, Colorado 80528-9544 (US)
(74) Representative: Zimmermann, Tankred Klaus
(86) International application number: PCT/US2013/023061
(87) International publication number: WO 2014/116222

(56) References cited:
- KR-A- 20110 106 261
- KR-A- 20110 134 362
- US-A1- 2006 098 245
- US-A1- 2007 278 303
- US-A1- 2009 194 592

## Description

### BACKGROUND

Data-bearing images, e.g., machine-readable codes, such as graphical alpha-numerics (e.g., barcodes), are sometimes placed on objects, such as containers, documents, labels, books, software, images, machinery, devices, etc. Electronic data-bearing images may be associated with or may be placed on electronic documents.

KR 10-2011-0106261A discloses an extracting/decoding device for 2D barcode image of arbitrary contrast.

US 2009/0194592 A1 discloses a method for producing color barcodes to keep the integrity or authenticity of the color barcode.

US 2006/0098245 A1 discloses a method for acquiring print medium information and for controlling image printing scheme using barcode.

KR 10-2011-0134362A discloses a system for decoding skewed data matrix barcode.

US 2007/0278303 A1 discloses a method for generating a two-dimensional barcode.

### BRIEF DESCRIPTION OF THE DRAWINGS

Figure 1A illustrates an example of a data-bearing image.
Figure 1B illustrates an example of a data-bearing image formed by modifying the data-bearing image in Figure 1A, according to an embodiment.
Figure 2 is a block diagram illustrating an example of a data-bearing- image generator.
Figure 3 is an example representation of a data-bearing image, showing the data bits of decoded modules.
Figure 4 is a flowchart of an example of a method of automatically modifying a barcode, according to another embodiment.
Figure 5 is a flowchart of an example of a method of automatically modifying a barcode, according to another embodiment.

### DETAILED DESCRIPTION

In the following detailed description, reference is made to the accompanying drawings that form a part hereof, and in which is shown, by way of illustration, specific embodiments. Other embodiments may be utilized and process, logical, and electrical changes may be made without departing from the scope of the present disclosure. The following detailed description is, therefore, not to be taken in a limiting sense.

Data-bearing images can be one or two dimensional. For example, two-dimensional barcodes may be referred to as matrix codes and may include data encoded in black modules and white modules of the two-dimensional barcodes. For example, there is an industry/organizational/public specification that dictates how to read and write using the black and white modules.

However, data-bearing images can be tampered with, and it can be difficult to determine whether tampering has occurred. For example, data (e.g., initial data) is typically encoded in the modules of a data-bearing image, and that data can be tampered with. Some of the embodiments allow for the modification of some of these modules so at least some of the data can be encoded in the modified modules, e.g., thereby replicating at least some of the data. For example, some of the white modules of the black and white modules of a data-bearing image might be converted to colored modules and at least some of the data encoded in black and white modules might be encoded in colored modules, e.g., thereby replicating that data. The replicated data in the colored modules can be compared to data that was encoded in the black and white modules to determine whether tampering has occurred.

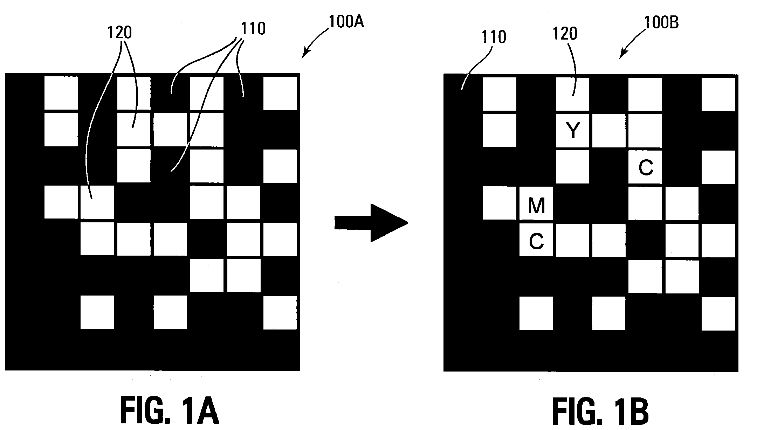

Figure 1A illustrates an example of a machine-readable, data-bearing image, such as a two-dimensional barcode 100A (e.g., a preexisting barcode). For example, barcode 100A might be a standard Data-Matrix barcode. However, other barcodes, such as standard QR (quick-response) barcodes, standard Aztec barcodes, etc., are amenable to the methods disclosed herein.

Barcode 100A might include modules, such as black modules 110, that encode data that cannot be modified and modules, such as white modules 120, that encode data that can be modified. As such, barcode 100A can be a two-tone barcode.

Alternatively, the modules that encode data that cannot be modified and the modules that encode data that can be modified can respectively be of any two tones having sufficient contrast to be interpreted as black and white, e.g., by a standard (e.g., a non-proprietary) two-dimensional barcode reader. For example, a tone may be treated as white by the standard reader when it includes a sufficiently saturated color (e.g., yellow), e.g., that is at most 25 percent of the "reflective density" of black. A tone may be treated as black by the standard reader when it includes a sufficiently unsaturated color (e.g., blue), e.g., that is 30 to 70 percent of the "reflective density" of black.

For example, a standard two-dimensional barcode reader might operate according to an ISO/IEC 15426-2 accuracy standard and/or ISO/IEC 15415 and ISO/IEC 15416 quality specifications. Note, for example, that standard two-dimensional barcode readers are typically configured to decode standard two-dimensional barcodes, e.g., with black and white modules only.

The standard ISO/IEC 16022: "Information technology - Automatic identification and data capture techniques - Data Matrix bar code symbology specification" may govern the reading and writing of a standard Data Matrix barcode, for example, and the standard ISO/IEC 18004:2006: "Information technology - Automatic identification and data capture techniques - QR Code 2005 bar code symbology specification" may govern the reading and writing of a standard QR barcode, for example.

As such, the modules that encode data that cannot be modified may be any color that is interpreted by a standard reader as black, e.g., any color that is 30 to 70 percent of the "reflective density" of black, and the modules that encode data that can be modified may be any color that is interpreted by a standard reader as white, e.g., any color that is at most 25 percent of the "reflective density" of black. For example, a standard reader might read a two-dimensional barcode based on contrast in intensity independently of color, e.g., independently of chroma or hue.

Barcode 100A may represent an individual state, such as a stage in a multi-stage workflow. Figure 1B illustrates a data-bearing image, such as a barcode 100B, at another stage in the work flow. The barcode 100B may be formed by adding data, e.g., encoded as yellow (Y), cyan (C), and magenta (M), to some of the white modules 120 of barcode 100A, for example. Therefore, barcode 100B may be referred to as a progressive barcode. For embodiments where barcode 100A might include blue and yellow, for example, a more unsaturated yellow might be added to some of the yellow modules to form barcode 100B.

The black and white modules in barcode 100A encode data. For example, the black and white modules in barcode 100A might encode a digital character code, such as a binary code, e.g., a code of ones (1s) and zeros (0s). The black and white modules might collectively encode different types of data, such as original data and extra data, corresponding to the original data. For example, the extra data might be ECC (error correction code) data that allows errors in the original data to be detected and, in some cases, recovered.

For some embodiments, barcode 100A might be modified by adding data to the white modules in barcode 100A to form barcode 100B as follows: A number of black modules and a number of white modules in barcode 100A, used to encode first data and extra data (e.g., ECC data), corresponding to the first data, are determined. When the number of white modules is greater than or equal to the number of black modules, at least some of the number of white modules are changed to colored modules (e.g., yellow (Y), cyan (C), and/or magenta (M) modules), and at least some of the first data and at least some of the extra data are encoded in the colored modules. When the number of white modules is less than the number of black modules, at least some of the number of white modules are changed to colored modules, and the first data are encoded in the colored modules.

For some embodiments the first data might be any data that is stored in barcode 100A. For example the first data might be data from a preexisting barcode, such as barcode 100A, e.g., at a particular stage in a workflow. The extra data might be data that is associated with the first data, for some embodiments. For example, the extra data might be ECC data that allows errors in the first data to be detected and, in some cases, recovered.

More generally, for some embodiments, a data-bearing image, such as barcode 100A, might be modified as follows: A number of first modules, e.g., white modules, and a number of second modules, e.g., black modules, of the data-bearing image used to encode first data and extra data, corresponding to the first data, are determined, where portions of the first data and/or portions of the extra data encoded in the second modules cannot be modified. When the number of first modules is greater than or equal to the number of second modules, at least some of the number of first modules are modified (e.g., by changing them to colored modules) to encode at least some of the first data and at least some of the extra data. When the number of first modules is less than the number of second modules, at least some of the number of first modules are modified (e.g., by changing them to colored modules) to encode the first data. Note that for other embodiments, the first modules may be used to encode new data in addition to their own ECC data.

An advantage of the embodiments is that the added content, e.g., the colors, can be used to determine if the original barcode, e.g., barcode 100A, was tampered with. For example, since the color data can directly relate to the original black and white data, it can replicate it, encrypt it, etc. Therefore, the color data can be compared to the original data to see if they match. If they don't match, tampering has likely occurred.

For some embodiments, the colored modules in barcode 100B may encode data that is readable by reading them as white modules, e.g., using a standard reader, and different data that is readable by reading them based on their color, e.g., using a non-standard (a proprietary) reader. For example, the colors in the colored modules (e.g., the yellow (Y), cyan (C), and/or magenta (M)) might be saturated, e.g., so that they might be at most 25 percent of the "reflective density" of black. For example, each colored module might encode a multiple-bit code that is readable by reading the colored module based on its color and a single bit, e.g., a zero, that is readable by reading the colored module as a white module.

For example, a standard reader might interpret the saturated colored modules as white modules, e.g., the standard reader might assign a value of zero to a saturated color module, and a non-standard reader might interpret the saturated colored modules according to their actual colors, e.g., the non-standard reader might assign a value of 00 to a white module, a value of 01 to a yellow module, etc.

Barcodes 100A and 100B may be physical barcodes that may be printed as hardcopy images using a printer or electronic barcodes that may be stored, e.g., in a computer, in the form of digital image data, such as a bitmap. The bitmap may be converted into a particular data format, such as Portable Document Format (PDF), Tag Image File Format (TIFF), Joint Photographic Experts Group (JPEG), a string in a database, or other data format. A physical barcode may be image data that is printed as a hardcopy image on media, such as paper, on a radio-frequency-identification (RFID) tag, etc.

A barcode reader may be defined as any device that is configured to capture an image of a barcode and that is configured to decode the captured image. For example, a barcode reader may include the machine-readable instructions, such as software, that decode an image of a barcode into digital character code, such as binary code. For example, the machine-readable instructions may be on a computer, and an image-capturing device may be coupled to the computer. A mobile telephone with a camera that is configured to decode barcodes may be considered to be a barcode reader.

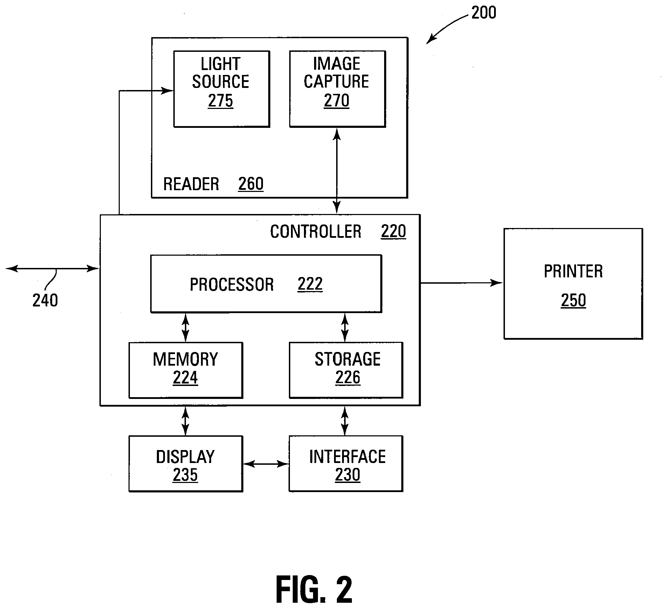

Figure 2 is a block diagram illustrating an embodiment of a data-bearing-image generator, such as a barcode generator 200. Barcode generator 200 may include a controller 220 that may be configured to allow generator 200 to perform the methods and functions disclosed herein for generating (e.g., automatically) the data-bearing images disclosed herein, such as barcode 100B from barcode 100A (Figures 1A and 1B). Note that when one or more operations are performed in response to an event without user intervention, the one or more operations may be taken as being performed automatically for some embodiments. For some embodiments, barcode generator 200 may be configured to print over a preexisting barcode, such as barcode 100A, e.g. affixed to an object, to produce barcode 100B.

Controller 220 may include a processor 222 for processing machine-readable instructions, such as processor-readable (e.g., computer-readable) instructions. The machine-readable instructions may configure processor 222 to allow controller 220 to allow barcode generator 200 to perform the methods and functions associated with reading, generating, and modifying (e.g., automatically) the two-dimensional barcodes disclosed herein.

The machine-readable instructions may be stored in a memory 224, such as a non-transitory computer-usable medium, coupled to processor 222 and may be in the form of software, firmware, hardware, or a combination thereof. In a hardware solution, the machine-readable instructions may be hard coded as part of processor 222, e.g., an application-specific integrated circuit (ASIC) chip. In a software or firmware solution, the instructions may be stored for retrieval by the processor 222. Some additional examples of non-transitory computer-usable media may include static or dynamic random access memory (SRAM or DRAM), read-only memory (ROM), electrically erasable programmable ROM (EEPROM) memory, such as flash memory, magnetic media and optical media, whether permanent or removable, etc.. Some consumer-oriented computer applications are software solutions provided to the user in the form of downloads, e.g., from the Internet, or removable computer-usable non-transitory media, such as a compact disc read-only memory (CD-ROM) or digital video disc (DVD).

Controller 220 may include storage device 226, such as a hard drive, removable flash memory, etc. Storage device 226 may be configured to store digital image data (e.g., bitmaps, PDFs, TIFFs, JPEGs, etc.) corresponding to (e.g., representing) the two-dimensional barcodes disclosed herein, such as barcodes 100A and 100B. Storage device 226 may be configured to store encryption keys, such as PKI and IBE encryption keys configured to encrypt data to be encoded into the two-dimensional barcodes, e.g., as the colored modules in barcode 100B, or decrypt data read from the two-dimensional barcodes.

A human-machine interface 230 may be coupled to controller 220. Interface 230 may be configured to interface with a number of input devices, such as a keyboard and/or pointing device, including, for example, a mouse. Interface 230 may be configured to interface with a display 235 that may include a touchscreen that may function as an input device. Controller 220 may be coupled to a data network, such as the Internet, a Local Area Network (LAN), etc., and/or a computer via an interface 240.

Barcode generator 200 may include a printer 250 coupled to controller 220. For some embodiments, barcode generator 200 may include a reader 260 coupled to controller 220. Reader 260 may be configured to read two-dimensional, such as barcodes 100A and 100B.

For some embodiments, reader 260 may include an image-capturing device 270, such as a camera, configured to capture an image of a barcode. For some embodiments, image-capturing device 270 may be configured to capture an image of two-dimensional barcode and to convert the image into digital image data (e.g., a bitmap, PDF, TIFF, JPEG, etc.), representing the two-dimensional barcode. For example, image-capturing device 270 may be configured to capture an image of a two-dimensional barcode and to convert that image into an electronic version of the two-dimensional barcode. The machine-readable instructions may configure processor 222 to allow controller 220 to decode the two-dimensional barcodes disclosed herein, such as barcodes 100A and 100B. Barcode reader 260 may include a light source 275 configured to illuminate a barcode prior to reading the barcode.

For example, data read from a barcode might be compared to barcode data stored in storage device 226. Storage device 226 might be used to store barcode data that is read from a barcode by barcode reader 260 for some embodiments.

For some embodiments, processor 222, memory 224, and storage 226 might be part of a computer, such as a personal computer. As such, the machine-readable instructions may configure processor 222 to allow a computer to create or modify electronic versions of two-dimensional barcodes and to attach them to electronic documents. The computer may be coupled to a printer that can print the electronic documents with the barcodes attached thereto or individual barcodes as hardcopy images.

It should be recognized that the functionality of the various block components described with reference to Figure 2 may not necessarily be segregated into distinct components or component portions of a data-bearing-image generator. For example, a single component or component portion of a data-bearing-image generator could be adapted to perform the functionality of more than one block component of Figure 2. Alternatively, one or more components or component portions of a data-bearing-image generator could be combined to perform the functionality of a single block component of Figure 2.

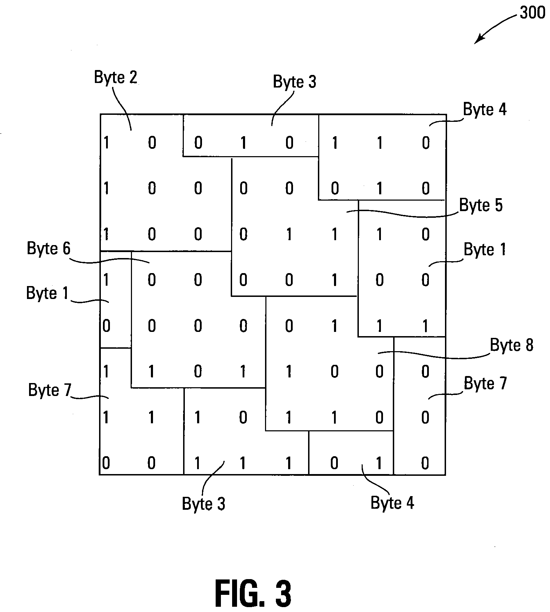

Figure 3 is a representation of a data-bearing image, such a standard two-dimensional barcode 300, e.g., that may be similar to barcode 100A. The data bits in the barcode 300 represent modules and were obtained from converting (e.g., decoding) the modules, e.g., according to a standard, such as ISO/IEC 16022. For example, the ones are decoded black modules, and the zeros are decoded white modules, and thus the ones represent the black modules and the zeros represent white modules. Note that the barcode is intended as a non-limiting example of a data carrier that is amenable to the embodiments described herein. However, the embodiments described herein are applicable to other data carriers, such as graphical alpha-numerics, extensible markup language (XML) data fields, etc.

The data bits, and thus the modules, may be grouped into bytes 1-8, containing eight bits (modules) each, where bytes 2, 5, 6, and 8 are contiguous and are each in one segment of barcode 300, e.g., according to ISO/IEC 16022. However, bytes 1, 3, 4 and 7 are not contiguous and are each in two or more separate segments of barcode 300, e.g., according to ISO/IEC 16022.

Note that in the case of a two dimensional barcode, the number of data bytes may vary with the overall dimension of the barcode. Thus, the distribution of the bytes may change according to ISO/IEC 16022, for example.

Table 1 presents data, e.g., the bit streams, read from each byte of Figure 3, e.g., by a standard reader according to a standard, such as ISO/IEC 16022. For example, the machine-readable instructions in barcode generator 200 might include machine-readable instructions that configure processor 222 to allow controller 220 of barcode generator 200 to decode a barcode, such as barcode 300, into the bit streams in Table 1 according to the standard.

**Table 1**

| Byte | Bit Stream | Number of 1 (K) values | Number of 0 (W) values |
|---|---|---|---|
| 1 | 10100011 | 4 | 4 |
| 2 | 10100100 | 3 | 5 |
| 3 | 10111010 | 5 | 3 |
| 4 | 01110010 | 4 | 4 |
| 5 | 00011001 | 3 | 5 |
| 6 | 00000101 | 2 | 6 |
| 7 | 01011000 | 3 | 5 |
| 8 | 01100110 | 4 | 4 |

Note that black (K) = 1 and white (W) = 0. Note that standard barcodes, such as barcode 300, typically do not encode the ECC for each byte in the barcode, but instead typically append the ECC to the end of the data stream for the entire barcode. Note that for other embodiments, black modules might encode zeros and white modules might encode ones.

Barcodes are sometimes encoded using linear block codes, using a parameterization, such as (n,m,dₘᵢₙ), where n is the length of a code-word in symbols, m is the number of source symbols that will be used for encoding at once, and dₘᵢₙ is the minimum Hamming distance between any two allowable code words. For example, source words may be respectively encoded as 00, 01, 10, and 11, where each encoding might correspond to original data.

Additional data, such as ECC, might be added to each encoding so that the original data might be represented by the linear block code in Table 2, according to an embodiment. This linear block code may be referred to as an (8,2,5) linear block code, where n = 8, m = 2, and dₘᵢₙ = 5. Note that each original two-bit encoding is represented by an eight-bit (e.g., one-byte) representation that includes extra data, meaning that 75 percent of each eight-bit representation is extra data, e.g., each byte has 75 percent ECC. For example, each byte may be encoded into black and white modules of a byte of a barcode, where each byte has its own ECC. As such, Table 2 is an example of what is termed as "by-byte ECC," according to an embodiment. For example, the machine-readable instructions in barcode generator 200 might configure processor 222 to allow controller 220 to create a two-dimensional barcode with bytes that have their own ECC, e.g., in response to a user inputting data into barcode generator 200.

Note that the Hamming distance between each eight-bit representation and each other eight-bit representation in Table 2 is greater than or equal to five. For example, the Hamming distances between 00000011 and 11110000, between 00000011 and 01111111, and between 00000011 and 10001100, are respectively six, five, and five.

**Table 2: Example (8,2,5) linear block code**

| **Source word encoding (original data)** | **One Byte Representation** |
|---|---|
| 00 | 11110000 |
| 01 | 01111111 |
| 10 | 10001100 |
| 11 | 00000011 |

Table 3 is an example of an (8, 4, 3) linear block code, where n = 8, m = 4, and dmin = 3, according to another embodiment. For example, the Hamming distance between each eight-bit representation in Table 3 and each other eight-bit representation in Table 3 is greater than or equal to three. Note that each original four-bit encoding is represented by an eight-bit (e.g., one-byte) representation that includes extra data, meaning that 50 percent of each eight-bit representation is extra data, e.g., each byte has 50 percent ECC. For example, each byte may be encoded into black and white modules of a byte of a barcode, where each byte has its own ECC. As such, Table 3 is an example of what is termed "by-byte ECC", according to an embodiment. For example, an advantage of by-byte ECC is that by-byte ECC can make decoding of the bytes amenable to parallel processing by integral multiples of bytes.

**Table 3: Example (8,4,3) linear block code**

| **Source word encoding (original data)** | **One Byte Representation** |
|---|---|
| 0000 | 00001111 |
| 0001 | 00110011 |
| 0010 | 01010101 |
| 0011 | 01111110 |
| 0100 | 11100111 |
| 0101 | 10111101 |
| 0110 | 11011011 |
| 0111 | 10101010 |
| 1000 | 10000001 |
| 1001 | 00011000 |
| 1010 | 01000010 |
| 1011 | 00100100 |
| 1100 | 11110000 |
| 1101 | 11001100 |
| 1110 | 01111001 |
| 1111 | 10000110 |

Note that the minimum Hamming distance dₘᵢₙ = 2(error rate) + 1, where the error rate is the number of errors that can be corrected while still being able to correlate back to the original data. For example, for the (8,2,5) linear block code of Table 2, the error rate is 2, and for the (8,4,3) linear block code of Table 3, the error rate is 1. Note that the machine readable instructions allow processor 222 of barcode generator 200 to create (e.g., automatically) the linear block codes of Tables 2 and 3, e.g., in response to barcode generator 200 receiving the original data.

Following are methods for automatically modifying a preexisting data-bearing image, such as barcode 100A in Figure 1A, to produce another (e.g., a new) data-bearing image, such as barcode 100B in Figure 1B. For example, a data-bearing-image generator, such as barcode generator 200 (Figure 2), may be configured to perform the methods. For example, the machine-readable instructions may configure processor 222 to allow barcode generator 200 to perform the methods.

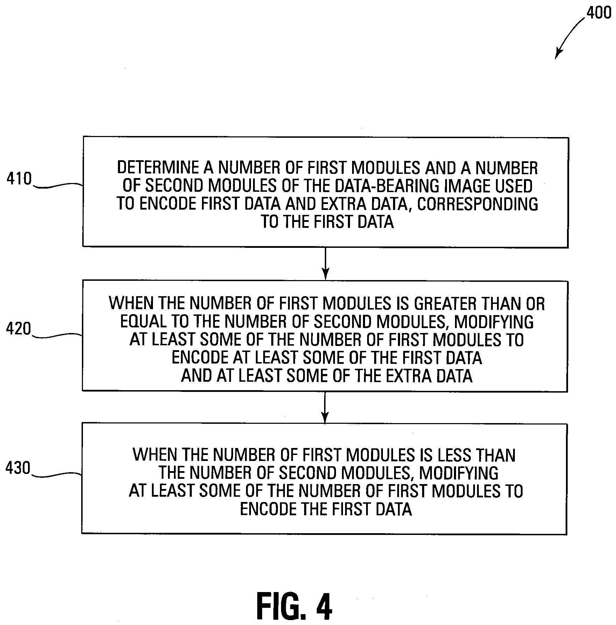

For some embodiments, the machine-readable instructions may configure a processor, such as processor 222, to allow the data-bearing-image generator to perform a method 400 of automatically modifying a data-bearing image, as illustrated by the flowchart in Figure 4. The data-bearing-image generator may perform method 400 in response to receiving an instruction, e.g., from a user, that data is to be added to a data-bearing image.

A number of first modules, e.g., white modules, and a number of second modules, e.g., black modules, of the data-bearing image used to encode first data and extra data, corresponding to the first data, is determined at block 410, where the portions of first data and/or portions of the extra data encoded in the second modules cannot be modified. For example, a reader, such as reader 260 of barcode generator 200, might read the data-bearing image, and a controller, such as controller 220 of barcode generator 200, might count the number of first and second modules.

At block 420, when the number of first modules is greater than or equal to the number of second modules, at least some of the number of first modules are modified, e.g., by the controller, to encode at least some of the first data and at least some of the extra data. At block 430, when the number of first modules is less than the number of second modules, at least some of the number of first modules are modified, e.g., by the controller, to encode the first data. For example, the first (e.g., white) modules might be modified by adding colors, such as yellow, cyan, magenta, blue, green, red, etc., to them.

The data-bearing image may include first and second bytes, where the first byte includes the number of first modules and the number of second modules. When the number of first modules in the first byte is less than the number of second modules in the first byte, the controller might modify one or more first modules in the second byte to encode the extra data. When the number of first modules in the first byte is less than the number of second modules in the first byte and when the number of first modules in the first byte is insufficient to encode all of the first data when all of the number of first modules in the first byte are modified, the controller might modify all of the number of first modules in the first byte to encode a portion of the first data and one or more first modules in the second byte to encode a remaining portion of the first data.

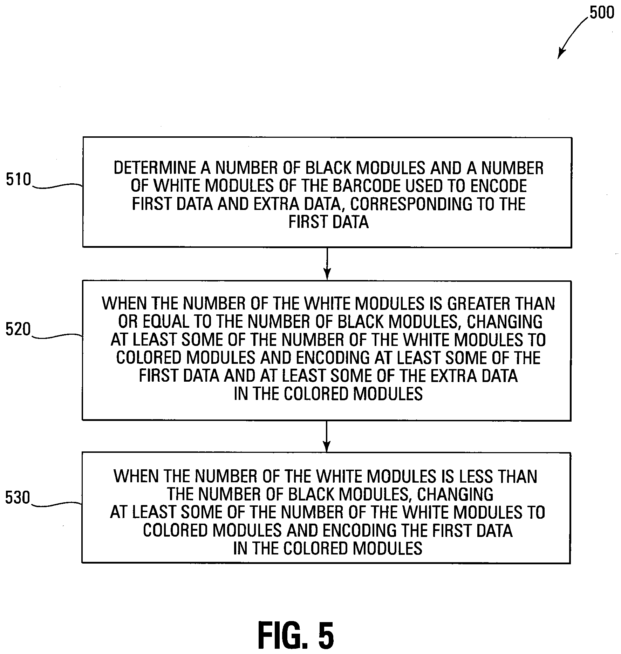

For one embodiment, the machine-readable instructions may configure processor 222 to allow barcode generator 200, to perform a method 500 of automatically modifying a barcode, such as barcode 100A, as illustrated by the flowchart in Figure 5. For example, the modification may be effected by adding data to barcode 100A, e.g., to produce barcode 100B. As such, barcode generator 200 may perform method 500 in response to receiving an instruction, e.g., from a user, that data is to be added to barcode 100A.

A number of black modules and a number of white modules of the barcode that are used to encode first data (e.g., original data) and extra data (e.g., ECC data), corresponding to the first data, may be determined in block 510. For example, the reader 260 of barcode generator 200 might read the barcode, and controller 220 might count the number of black and white modules in each byte.

At block 520, when the number of white modules is greater than or equal to the number of black modules, at least some of the number of white modules might be changed to colored modules, e.g., by controller 220, and at least some of the first data and at least some of the extra data might be encoded in the colored modules, e.g., by controller 220. At block 530 when the number of white modules is less than the number of black modules, at least some of the number of white modules might be changed to colored modules, e.g., by controller 220, and the first data might be encoded in the colored modules, e.g., by controller 220.

For some embodiments, at least some of the white modules can always be changed to colored modules, e.g., meaning that at least some of the first data can always be encoded in the colored modules that correspond to the changed white modules. After these modules are changed to colored modules, controller 220 may then determine the number of remaining white modules available for conversion to colored modules and the remaining amount of first data and/or extra data that can be encoded in those colored modules. Based on this, controller 220 might decide what is to be done with the remaining amount of first data and/or extra data.

For example, if the number of remaining white modules is sufficient to encode the remaining first data and/or extra data, controller 220 might convert the remaining white modules to colored modules and encode the remaining first data and extra data therein. However, if there is an insufficient number of remaining white modules that can be converted to colored modules for encoding the remaining first data and/or extra data, it might not be possible to encode the remaining first data and/or extra data. In such situations, for example, the controller 220 might reduce the remaining first data and/or extra data, e.g., by hashing, cropping, etc., and then encode the reduced data in the colored modules.

The barcode might include first and second bytes, where the first byte comprises the number of white modules and the number of black modules. When the number of white modules in the first byte is less than the number of black modules in the first byte, the controller might change one or more white modules in the second byte to colored modules and might encode the extra data in the colored modules in the second byte.

When the number of white modules in the first byte is less than the number of black modules in the first byte and when the number of white modules in the first byte is insufficient to encode all of the first data when all of the number of white modules in the first byte are changed to colored modules, the controller might change all of the number of white modules in the first byte to colored modules and might encode a portion of the first data in the colored modules in the first byte. The controller might also change one or more white modules in the second byte to one or more colored modules and might encode a remaining portion of the first data in one or more colored modules in the second byte.

Controller 220 might convert the black modules in each byte of a preexisting barcode to ones and the white modules in each byte of the preexisting barcode to zeros and might determine the number of ones and the number of zeros corresponding to each byte. Hereinafter, zeros and white modules will be used interchangeably, as will ones and black modules. For example, a byte might be read as KWWWWKKW, where each K represents a black module in the byte and each W represents a white module in the byte of the preexisting barcode. Controller 220 might convert (e.g., decode) byte KWWWWKKW to the bit stream (e.g., the decoded byte) 10000110, where each 1 corresponds to a black (K) module in the byte and each 0 corresponds to a white (W) module in the byte of the preexisting barcode.

For some embodiments, when the number of white modules (e.g., the number of zeros) in a byte is greater than or equal to the number of black modules (e.g., the number of ones) in the byte, controller 220 might encode the white modules as shown in the example of Table 4. For example, each color may be encoded by a multi-bit code (e.g. a two-bit color code), as shown, e.g., each white module in a preexisting barcode, such as barcode 100A (Figure 1A), might be replaced with color that encodes a two-bit color code to create a new barcode, such as barcode 100B (Figure 1B). Note, for example, that the two-bit color code is sufficient when the number of white modules is at least equal to the number of black modules.

**Table 4: Example encoding of white modules**

| **Code** | **Color** |
|---|---|
| 00 | White (W) |
| 01 | Yellow (Y) |
| 10 | Cyan (C) |
| 11 | Magenta (M) |

For example, the decoded byte 10000110 of the preexisting barcode has five zeros, corresponding to five white modules, and three ones, corresponding to three black modules. Then, in response to the instruction that data is to be added to the byte, controller 220 adds the data by converting zeros into the color codes in Table 4. For some embodiments, the color codes may be selected so that the bits of the selected color codes collectively replicate the decoded byte (e.g., decoded byte 10000110), when the number of zeros is greater than or equal to the number of ones. For example, single zeros in the decoded byte may be replaced by color codes, e.g., starting with the leftmost zero, until the decoded byte 10000110 is replicated. Since the decoded byte has eight bits, each of the first four zeros is replaced with a two-bit color-code, e.g., corresponding to one of the colors in Table 4.

Therefore, the decoded byte 10000110 becomes 1[10][00][01][10]110. Note that each bracketed two-bit color code corresponds to one of the zeros in the (original) decoded byte 10000110. Moreover, the bracketed two-bit color codes [10][00][01][10] collectively replicate the decoded byte 10000110, and therefore include original data and extra data, such as ECC data, corresponding to the original data of the decoded byte 10000110. For example, from Table 3, the original data of decoded byte 10000110 may be 1111.

Note that the process of replacing zeros with the color codes may stop when the bit pairs collectively replicate decoded byte 10000110, e.g., when the number of zeros is greater than the number of ones. Therefore, the last zero in decoded byte 10000110 is not replaced with a color code. Moreover, the ones remain as they are in that the ones correspond to black modules that cannot be modified, e.g., to which data cannot be added.

Controller 220 may then encode 1[10][00][01][10]110 into the color byte KCWYCKKW, so that the original data and extra data are encoded in CWYC. Barcode generator 200 may then create a new barcode having a byte where the first four white modules of byte KWWWWKKW of the preexisting barcode are now respectively CWYC. For example, controller 220 may instruct printer 250 of barcode generator 200 to print the new barcode as a hardcopy barcode on a media sheet, such as paper. Alternatively, the new barcode may be formed from the preexisting barcode by printer 250 printing over the preexisting barcode.

Another byte of the preexisting barcode may be the byte WKWKWKWK that contains original and extra data. This may be decoded to the decoded byte 01010101, having original data 0010 and extra data (Table 3), by controller 220. Note that the numbers of black and white modules, and thus the numbers of ones and zeros, are equal.

Again, each zero, e.g., starting at the leftmost zero, will be replaced with a two-bit color code from Table 4 until the color codes collectively replicate the decoded byte 01010101. Since decoded the byte 01010101 has eight bits and four zeros, each zero will be replaced with a two-bit color code from Table 4, so that the decoded byte 01010101 becomes the new byte [01]1[01]1[01]1[01]1. Note that the bracketed color codes once again replicate the decoded byte 01010101 and thus include the original and extra data.

Controller 220 may then encode the new byte [01]1[01]1[01]1[01]1 as YKYKYKYK, so that the original data and extra data are encoded in YYYY. Barcode generator 200 may then create a new barcode having a byte where the white modules of byte WKWKWKWK of the preexisting barcode are now respectively YYYY. Note that although in this example the original data and extra data are encoded in YYYY this is not generally the case.

For some barcodes, such as Data Matrix barcodes, the ECC data might be appended to the end of the original data bits. For example, in barcode 200, the smallest ECC might be 62.5 percent of the eight-by-eight module barcode 200, meaning bytes one to three might be original data and bytes four to eight might be ECC data. For some embodiments, the entire barcode 200 can be as handled in a manner similar to the individual bytes in the examples above.

For some embodiments, when the number of white modules in a byte of a preexisting barcode is less than the number of black modules in the byte, controller 220 might encode the white modules as shown in Table 4. Moreover, when the number of white modules is less than the number of black modules in the byte, the white modules might be changed to colored modules and original data might be encoded in the colored modules, e.g., without the extra data (e.g., ECC data). For some embodiments, this may involve determining whether the number of white modules in the preexisting barcode is sufficient to contain the original data in the byte when the white modules are changed to colored modules.

For example, for some barcodes, such as the Data Matrix barcodes, 25-percent-, 50-percent-, and 75-percent-ECC implementations might be used, where the percentages are the percentages of the total number of bits, e.g., in a byte or an entire barcode, that are used for ECC data.

Table 5 shows examples of the number of bits used for the original data per eight-bit byte for each of the 25-percent-, 50-percent-, and 75-percent-ECC implementations and the number of white modules (e.g., number of zeros) for containing the original data without ECC data.

**Table 5 Example of number of white modules per byte of a preexisting barcode for different ECCs**

| **Percent ECC** | **Number Bits Of Original Data** | **Number of White Modules Sufficient for Containing Original Data Without ECC** |
|---|---|---|
| 25 | 6 | 3 |
| 50 | 4 | 2 |
| 75 | 2 | 1 |

Note that the example in Table 5 is for the two-bit color codes in the example of Table 4. In the example of Table 5, for 25-percent ECC, there are six bits of original data, for 50-percent ECC, four bits of original data, and for 75-percent ECC, two bits of original data. For example, three white modules need to be replaced by the colors corresponding to the two-bit color codes to replicate six bits of original data, two white modules to replicate four bits of original data, and one white module to replicate two bits of original data.

For some embodiments, after controller 220 determines that the number of white modules in a byte of a preexisting barcode is less than the number of black modules in the byte, and thus the number of zeros in the decoded byte is less than the number of ones in the decoded byte, controller 220 may determine whether the byte has a sufficient number of white modules for replicating the original data (e.g., without ECC data) when the white modules are changed to colored modules, and thus whether the decoded byte has a sufficient number of zeros for replicating the original data (e.g., without ECC data) when the zeros are changed to the multiple-bit color codes. For example, this might involve controller 220 determining the percent ECC for the byte. If a sufficient number of white modules and zeros exists, controller 220 might reduce the decoded byte to the appropriate number of data bits, e.g., using an ECC decoder that might be included in the machine-readable instructions in memory 224 of controller 220.

For example, controller 220 might decode a byte KKWKKWKK in a preexisting barcode to be the bit string 11011011. For 50-percent ECC, the number of modules, and thus the number of bits, of original data is four. For example, for the 50-percent ECC in the example in Table 3, the four bits of decoded original data are 0110, and the four modules in the preexisting barcode, corresponding to the decoded original data, are WBBW.

For this example, the number of white modules is less than the number of black modules, and thus the number of zeros is less than the number of ones. Also, the sufficient number of white modules, and thus zeros, is two for the 50-percent ECC in Table 3 and the two-bit color codes of Table 4. Therefore, byte KKWKKWKK has a sufficient number of white modules (e.g., two) to replicate the original data (that is, before ECC is applied) in the colors in Table 4, and thus the decoded byte has a sufficient number of zeros (e.g., two) to replicate the original data with the two-bit color codes in Table 4.

Each of the two zeros, e.g., starting at the leftmost zero, of the decoded byte 11011011 may then be replaced with a two-bit color code from Table 4 so that the two-bit color codes collectively replicate the original data 0110. For example, the decoded byte 11011011 becomes the new byte 11[01]11[10]11, where each bracketed two-bit color code corresponds to one of the zeros in the decoded byte 11011011. Note that bracketed two-bit color codes [01][10] collectively replicate original data 0110, and therefore include original data, but not the ECC data. Controller 220 may then encode 11[01]11[10]11 into the byte KKYKKCKK of a new barcode by adding the colors to white modules in the preexisting barcode so that the original data, but not the ECC data, are encoded in YC in a byte of the new barcode, e.g., created from the preexisting barcode.

For some embodiments if the byte KKWKKWKK is a first byte in the preexisting barcode and the byte KKYKKCKK is a first byte in the new barcode, the ECC data may be carried over to a second byte in the new barcode created from a second byte in the preexisting barcode. For example, the second byte of the preexisting barcode would need a sufficient number of extra white modules to hold (e.g., replicate) the ECC data from the first byte of the preexisting barcode. For example, the ECC in the decoded first byte 11011011 from the preexisting barcode might be 1111. Note that the original data 0110 in the decoded first byte 11011011 of the preexisting barcode was encoded as YC in the first byte of the new barcode in the example above.

The ECC 1111 might be added to the second byte WKWWWWKW of the preexisting barcode. The second byte WKWWWWKW may be decoded as 01000010. In this example, the zeroes need to encode the eight bits of the second decoded byte 01000010 of the preexisting barcode and the four bytes of ECC 1111 of the first byte of the preexisting barcode when the zeros are replaced by the two-bit color codes of Table 4. Therefore, a total number of six zeros are required, since each zero will be replaced by a two-bit color code, and thus the decoded second byte 01000010 of the preexisting barcode has a sufficient number of zeros.

The decoded second byte 01000010 of the preexisting barcode plus the ECC data 1111 from the first byte of the preexisting barcode becomes [01]1[00][00][10][11]1[11], where the bracketed two-bit color codes [01][00][00][10] replicate the decoded second byte 01000010, including original data and the corresponding ECC data, and the remaining bracketed two-bit color codes [11][11] replicate the ECC data 1111 from the first byte. Controller 220 may then encode [01]1[00][00][10][11]1[11] into the second byte YKWWCMKM of the new barcode, e.g., according to Table 4.

Note that for some preexisting barcodes, such as Data Matrix barcodes, the ECC bits might be appended to the end of the data bits. Thus, the entire barcode might be treated as a single "extended byte." When the barcode has less white modules than black modules, and thus the decoded barcode has less zeros than ones, and the barcode has a sufficient number of white modules to encode the original data of the barcode, but not the ECC data, then the white modules in the barcode can be converted to colored modules that collectively encode the original data, but not the ECC data. For example, each of the zeros in the decoded barcode may be converted a color code corresponding to a respective one of the colors.

In some instances, when the number of white modules is less than the number of black modules in a byte in a preexisting barcode, the number of white modules in the byte may be insufficient to encode all of the original data, e.g., without the ECC data, when all of the number of white modules in the byte are changed to colored modules, e.g., using the two-bit color codes of Table 4. For example, controller 220 might decode a first byte KWKKKWKK in a preexisting barcode as 10111011. Note that the number of white modules is less than the number of black modules, and thus the number of zeros is less than the number of ones.

Controller 220 might determine that the decoded original data is 100110, six bits, meaning that the first byte uses 25-percent ECC data, e.g., two bits of ECC data. From Table 5, e.g., for the two-bit color codes of Table 4, it is seen that the sufficient number of white modules required for replicating the six bits of original data is three, and thus the number of zeros in the decoded first byte should be three. However, the first byte KWKKKWKK has fewer than three white modules, and the corresponding decoded first byte 10111011 has fewer than three zeros. For example, the two white modules of the first byte are sufficient to replicate four of the six bits of original data using the two-bit color codes of Table 4.

For some embodiments, using the two-bit color codes of Table 4, the decoded first byte 10111011 might become 1[10]111[01]11, where the bracketed two-bit color codes [10][01] collectively replicate bits 1001 of the original data bits 100110. Controller 220 may then encode 1[10]111[01]11 as KCKKKYKK.

For some embodiments, the remaining bits 11 of original data might be carried over to a second byte having an extra zero. For example, for 25-percent ECC, if only original data, with no ECC data, is to be replicated by color data added to the second byte of the preexisting barcode, then the second byte of the preexisting barcode would need four white modules (e.g., the decoded second byte would need four zeros), three to replicate the original six bits of data of the second byte and one to replicate the remaining bits 11 of original data from the first byte. Note that if the two bits of ECC data from both the first byte and the second byte of the preexisting barcode are also be replicated, then the second byte would need six white modules (e.g., the decoded second byte would need six zeros), three to replicate the original data of the second byte, one to replicate the remaining bits 11 of original data carried over from the first byte, one to replicate the ECC data of the second byte, and one to replicate the ECC carried over from the first byte.

For some embodiments, when the number of white modules is less than the number of black modules in a preexisting barcode, and the number of white modules is insufficient to encode all of the original data, e.g., without the ECC data, when all of the number of white modules are changed to colored modules, e.g., using the two-bit color codes of Table 4, the number of bits than can be placed in a white module might be increased, e.g., as in the example shown in Table 6 for three-bit color codes.

**Table 6: Example encoding of white modules**

| **Code** | **Color** |
|---|---|
| 000 | White (W) |
| 001 | Yellow (Y) |
| 011 | Cyan (C) |
| 101 | Magenta (M) |
| 010 | Green (G) |
| 100 | Blue(B) |
| 110 | Red(R) |
| 111 | Mid-level Gray (Gr) between black and white |

The modules of yellow (Y), cyan (C), magenta (M), green (G), blue (B), red (R), and gray (Gr) might encode data that is readable by reading them as white modules, e.g., using a standard reader, and different data that is readable by reading them based on their color, e.g., using a non-standard (a proprietary) reader. For example, a colored module might encode a three-bit color code that is readable when the module is read based on its color and a single bit, such as a zero, that is readable when the module is read as a white module. The colors yellow (Y), cyan (C), magenta (M), green (G), blue (B), red (R), and gray (Gr) might be rather highly saturated, e.g., so that they might be at most 25 percent of the "reflective density" of black.

For example, for the decoded byte 10111011, having the six original data bits 100110 and 25-percent ECC, the sufficient number of white modules needed to contain (e.g., replicate) the original data is two using the three-bit color codes in Table 6. Therefore, the decoded byte 10111011 becomes 1[100]111[110]11, for example. Controller 220 may then encode 1[100]111[110]11 as KBKKKRKK, where the original data [100][110] is encoded as BR.

In some instances, a byte in a preexisting barcode might include one white module and seven black modules, e.g., a byte with less white modules than black. For example, the byte might include four bits of original data and four bits of ECC data (e.g., 50-percent ECC), six bits of original data and two bits of ECC data (e.g., 25-percent ECC), or eight bits of original data and no ECC (e.g., zero-percent ECC), e.g., the number of white modules in the byte is insufficient to encode all of the data when all of the number of white modules in the byte are changed to colored modules and the number of zeros in the decoded byte is insufficient for replicating the original data by changing each of the bit values in the decoded byte to one of the multiple-bit codes.

For example, to represent four bits of original data in the single white module, four bits per color might be used, requiring 2⁴ different colors. Similarly, for example, 2⁶ different colors might be required to represent six bits of original data in the single white module, and 2⁸ different colors might be required to represent eight bits of original data in the single white module. For some embodiments, to reduce the number of colors, e.g., to better distinguish among the colors, all of the original data might be encoded in colors to be placed in available (e.g., extra) white modules in one or more other bytes in the preexisting barcode. Similarly, for instances where all of the modules in a byte in a preexisting barcode are black, all of the original data in the byte might be encoded in colors to be placed in available (e.g., extra) white modules in one or more other bytes in the preexisting barcode, for some embodiments.

Note, however, that for some preexisting barcodes, such as Data Matrix barcodes, that might be treated as a single extended byte, original data or ECC data that is not encoded in colors added to available white modules might not be allowed since original data bits and ECC data bits might be sequential.

For some embodiments, the data (e.g., the original data and the corresponding ECC data) discussed herein might be altered, e.g., for security purposes, etc., such as by encrypting, hashing/digital signing, scrambling, etc., or by combinations of these. For example, data read from a preexisting barcode might be in an altered form and might have to be changed to an unaltered form, e.g., by decryption, etc., before replacing the zeros with multiple-bit codes. This data might be altered before adding it to the white modules, e.g., as colors.

For some embodiments, the machine-readable instructions may configure a processor, such as processor 222, to allow the data-bearing-image generator to perform a method of automatically modifying a data-bearing image as follows: The controller might decode each of a plurality of bytes of the data-bearing image into a corresponding decoded byte having first bit values, e.g., zeros, corresponding to first modules, e.g., white modules, in the corresponding byte in the data-bearing image, and second bit values, e.g., ones, corresponding to second modules, e.g., black modules that cannot be modified, in the corresponding byte in the data-bearing image, where each decoded byte has original data and ECC data, corresponding to the original data in that decoded byte.

When a number of first bit values in a decoded byte is greater than or equal to a number of second bit values in the decoded byte, a controller of the generator might change the first bit values to multiple-bit codes (e.g., multiple-bit color codes, such as in Table 4 or Table 6), each multiple-bit code having the first and/or the second bit values, until the multiple-bit codes collectively replicate the entire decoded byte. The controller may then modify the first modules of the corresponding byte of the data-bearing image so that each modified first module encodes one of the multiple-bit codes that collectively replicate the entire decoded byte. For example, modifying a module might include changing a white module to a colored module and encoding a corresponding multiple-bit code in that color.

When the number of first bit values in the decoded byte is less than the number of second bit values in the decoded byte, the controller might change the first bit values to the multiple-bit codes until the multiple-bit codes collectively replicate a portion of the decoded byte, having the original data. The controller may then modify the first modules of the corresponding byte of the data-bearing image so that each modified first module encodes one of the multiple-bit codes that collectively replicate the portion of the decoded byte.

The decoded byte might be a first decoded byte, corresponding to a first byte of the plurality of bytes of the data-bearing image. When the number of first bit values in the first decoded byte is less than the number of second bit values in the first decoded byte, the controller might change the first bit values in a second decoded byte, corresponding to a second byte of the plurality of bytes of the data-bearing image, to the multiple-bit codes until the multiple-bit codes collectively replicate the ECC data corresponding to the original data in the first decoded byte. The controller may then modify the first modules of the second byte of the data-bearing image so that each modified first module in the second byte of the data-bearing image encodes one of the multiple-bit codes that collectively replicate the ECC data, corresponding to the original data in the first decoded byte.

When the number of first bit values in the first decoded byte is less than the number of second bit values in the first decoded byte and when the number of first bit values in the first decoded byte is insufficient for replicating the original data in the first decoded byte by changing each of the first bit values in the first decoded byte to one of the multiple-bit codes, the controller might change each of the first bit values of the first decoded byte to one of the multiple-bit codes so that the multiple-bit codes collectively replicate a portion of the original data in the decoded first byte. The controller may then modify the first modules of the corresponding first byte of the data-bearing image so that each modified first module encodes one of the multiple-bit codes that collectively replicate the portion of the original data in the decoded first byte.

The controller may also change the first bit values in a second decoded byte, corresponding to a second byte of the plurality of bytes of the data-bearing image, to one of the multiple-bit codes until the multiple-bit codes collectively replicate the remainder of the original data in the decoded first byte. The controller may then modify the first modules of the second byte of the data-bearing image so that each modified first module in the second byte of the data-bearing image encodes one of the multiple-bit codes that collectively replicate the remainder of the original data in the decoded first byte.

Although specific embodiments have been illustrated and described herein it is manifestly intended that the scope of the claimed subject matter be limited only by the following claims and equivalents thereof.

## Claims

1. A method of automatically modifying a data-bearing image (1A), comprising:
determining a number of white modules (120) and a number of black modules (110) of the data-bearing image used to encode first data and extra data, corresponding to the first data,
when the number of white modules is greater than or equal to the number of black modules, modifying at least some of the number of white modules to encode at least some of the first data and at least some of the extra data; and
when the number of white modules is less than the number of black modules, modifying at least some of the number of white modules to encode the first data.

2. The method of claim 1, wherein the data-bearing image comprises first and second bytes, wherein the first byte comprises the number of white modules and the number of black modules, and further comprising when the number of white modules in the first byte is less than the number of black modules in the first byte, modifying one or more white modules in the second byte to encode the extra data.

3. The method of claim 2, wherein the extra data is error correction code data.

4. The method of claim 1, wherein the data-bearing image comprises first and second bytes, wherein the first byte comprises the number of white modules and the number of black modules, and further comprising when the number of white modules in the first byte is less than the number of black modules in the first byte and when the number of white modules in the first byte is insufficient to encode all of the first data when all of the number of white modules in the first byte are modified, modifying all of the number of white modules in the first byte to encode a portion of the first data and modifying one or more white modules in the second byte to encode a remaining portion of the first data.

5. The method of claim 1, wherein modifying at least some of the number of white modules to encode at least some of the first data and at least some of the extra data comprises changing at least some of the number of white modules to colored modules and encoding at least some of the first data and at least some of the extra data in the colored modules, and wherein modifying at least some of the number of white modules to encode the first data comprises changing at least some of the number of white modules to colored modules and encoding the first data in the colored modules.

6. The method of claim 5, wherein each colored module encodes a multi-bit code and a single bit, wherein the multiple-bit code is readable by reading the colored module based on its color and the single bit is readable by reading the colored module as a white module.

7. The method of claim 1, wherein the first data and/or the second data is altered by encrypting, hashing, and/or scrambling.

8. A method of automatically modifying a data-bearing image, comprising:
decoding white modules (120) of the data-bearing image into first bit values and
decoding black modules (110) of the data-bearing image into second bit values, the first and the second bit values collectively comprising original data and ECC data;
when a number of the first bit values is greater than or equal to a number of second bit values, changing the first bit values to multiple-bit codes that replicate the original data and the ECC data, and modifying the white modules of the data-bearing image so that the modified white modules encode the multiple-bit codes that replicate the original data and the ECC data; and
when the number of first bit values is less than the number of second bit values, changing the first bit values to multiple-bit codes that replicate the original data, and modifying the white modules so that the modified white modules encode the multiple-bit codes that replicate the original data.

9. The method of claim 8, wherein the first bit values are zeros and the second bit values are ones.

10. The method of claim 8, wherein the white modules and the black modules of the data-bearing image are in a first byte of the data-bearing image and the first and second bit values are in a first decoded byte, corresponding to the first byte of the data-bearing image, and further comprising, when the number of first bit values in the first decoded byte is less than the number of second bit values in the first decoded byte:
changing bit values in a second decoded byte, corresponding to a second byte of the data-bearing image, to multiple-bit codes that replicate the ECC data in the first decoded byte; and
modifying modules of the second byte of the data-bearing image so that the modified modules in the second byte of the data-bearing image encode the multiple-bit codes that replicate the ECC data in the first decoded byte.

11. The method of claim 8, wherein the white modules and the black modules of the data-bearing image are in a first byte of the data-bearing image and the first and second bit values are in a first decoded byte, corresponding to the first byte of the data-bearing image, and further comprising, when the number of first bit values in the first decoded byte is less than the number of second bit values in the first decoded byte and when the number of first bit values in the first decoded byte is insufficient for replicating the original data in the first decoded byte:
changing the first bit values in the first decoded byte to multiple-bit codes so that the multiple-bit codes replicate a portion of the original data in the decoded first byte, and modifying the white modules in the first byte of the data-bearing image so that the modified white modules encode the multiple-bit codes that replicate the portion of the original data in the decoded first byte; and
changing the first bit values in a second decoded byte, corresponding to a second byte of the data-bearing image, to multiple-bit codes so that the multiple-bit codes replicate a remainder of the original data in the decoded first byte, and modifying modules of the second byte of the data-bearing image so that the modified modules in the second byte of the data-bearing image encode the multiple-bit codes that replicate the remainder of the original data in the decoded first byte.

12. A computer-usable medium (224) containing machine-readable instructions that configure a processor (222) to allow a barcode generator to perform a method of automatically modifying a barcode (1A), the method comprising:
determining a number of black modules (110) and a number of white modules (120) of the barcode used to encode first data and extra data, corresponding to the first data;
when the number of white modules is greater than or equal to the number of black modules, changing at least some of the number of white modules to colored modules and encoding at least some of the first data and at least some of the extra data in the colored modules; and
when the number of white modules is less than the number of black modules, changing at least some of the number of white modules to colored modules and encoding the first data in the colored modules.

13. The computer-usable medium of claim 12, wherein the barcode comprises first and second bytes, wherein the first byte comprises the number of white modules and the number of black modules, and further comprising when the number of white modules in the first byte is less than the number of black modules in the first byte, changing one or more white modules in the second byte to colored modules and encoding the extra data in the colored modules in the second byte.

14. The computer-usable medium of claim 12, wherein the barcode comprises first and second bytes, wherein the first byte comprises the number of white modules and the number of black modules, and further comprising when the number of white modules in the first byte is less than the number of black modules in the first byte and when the number of white modules in the first byte is insufficient to encode all of the first data when all of the number of white modules in the first byte are changed to colored modules:
changing all of the number of white modules in the first byte to colored modules, and encoding a portion of the first data in the colored modules in the first byte; and
changing one or more white modules in the second byte to one or more colored modules, and encoding a remaining portion of the first data in the one or more colored modules in the second byte.

## Patentansprüche

1. Verfahren zum automatischen Modifizieren eines datentragenden Bildes (1A), umfassend:
Bestimmen einer Anzahl weißer Module (120) und einer Anzahl schwarzer Module (110) des datentragenden Bildes, die verwendet werden, um erste Daten und Zusatzdaten, die den ersten Daten entsprechen, zu kodieren,
wenn die Anzahl weißer Module größer oder gleich der Anzahl schwarzer Module ist, Modifizieren von zumindest manchen von der Anzahl weißer Module, um zumindest manche von den ersten Daten und zumindest manche von den Zusatzdaten zu kodieren; und
wenn die Anzahl weißer Module kleiner ist als die Anzahl schwarzer Module, Modifizieren von zumindest manchen von der Anzahl weißer Module, um die ersten Daten zu kodieren.

2. Verfahren nach Anspruch 1, wobei das datentragende Bild erste und zweite Bytes umfasst, wobei das erste Byte die Anzahl weißer Module und die Anzahl schwarzer Module umfasst, und ferner umfassend, dass dann, wenn die Anzahl weißer Module im ersten Byte kleiner ist als die Anzahl schwarzer Module im ersten Byte, ein oder mehrere weiße Module im zweiten Byte modifiziert werden, um die Zusatzdaten zu kodieren.

3. Verfahren nach Anspruch 2, wobei die Zusatzdaten Fehlerkorrekturcode-Daten sind.

4. Verfahren nach Anspruch 1, wobei das datentragende Bild erste und zweite Bytes umfasst, wobei das erste Byte die Anzahl weißer Module und die Anzahl schwarzer Module umfasst, und ferner umfassend, dass dann, wenn die Anzahl weißer Module im ersten Byte kleiner ist als die Anzahl schwarzer Module im ersten Byte und wenn die Anzahl weißer Module im ersten Byte nicht ausreicht, um alle ersten Daten zu kodieren, wenn alle von der Anzahl weißer Module im ersten Byte modifiziert werden, alle von der Anzahl weißer Module im ersten Byte modifiziert werden, um einen Teil der ersten Daten zu kodieren, und ein oder mehrere weiße Module im zweiten Byte modifiziert werden, um einen übrigen Teil der ersten Daten zu kodieren.

5. Verfahren nach Anspruch 1. wobei das Modifizieren von zumindest manchen von der Anzahl weißer Module, um zumindest manche von den ersten Daten und zumindest manche von den Zusatzdaten zu kodieren, ein Ändern von zumindest manchen von der Anzahl weißer Module in farbige Module und ein Kodieren von zumindest manchen von den ersten Daten und zumindest manchen von den Zusatzdaten in den farbigen Modulen umfasst, und wobei das Modifizieren von zumindest manchen von der Anzahl weißer Module, um die ersten Daten zu kodieren, ein Ändern von zumindest manchen von der Anzahl weißer Module in farbige Module und ein Kodieren der ersten Daten in den farbigen Modulen umfasst.

6. Verfahren nach Anspruch 5, wobei jedes farbige Modul einen Multibit-Code und ein einzelnes Bit kodiert, wobei der Multibit-Code durch Lesen des farbigen Moduls auf Basis von dessen Farbe lesbar ist und das einzelne Bit durch Lesen des farbigen Moduls als weißes Modul lesbar ist.

7. Verfahren nach Anspruch 1, wobei die ersten Daten und/oder die zweiten Daten durch Verschlüsseln, Hashing und/oder Scrambling abgeändert werden.

8. Verfahren zum automatischen Modifizieren eines datentragenden Bildes, umfassend:
Dekodieren weißer Module (120) des datentragenden Bildes in erste Bitwerte und
Dekodieren schwarzer Module (110) des datentragenden Bildes in zweite Bitwerte, wobei die ersten und die zweiten Bitwerte gemeinsam originale Daten und ECC-Daten umfassen;
wenn eine Anzahl der ersten Bitwerte größer oder gleich einer Anzahl zweiter Bitwerte ist, Ändern der ersten Bitwerte in Multibit-Codes, welche die originalen Daten und die ECC-Daten replizieren, und Modifizieren der weißen Module des datentragenden Bildes, so dass die modifizierten weißen Module die Multibit-Codes kodieren, welche die originalen Daten und die ECC-Daten replizieren; und
wenn die Anzahl erster Bitwerte kleiner ist als die Anzahl zweiter Bitwerte, Ändern der ersten Bitwerte in Multibit-Codes, welche die originalen Daten replizieren, und Modifizieren der weißen Module, so dass die modifizierten weißen Module die Multibit-Codes kodieren, welche die originalen Daten replizieren.

9. Verfahren nach Anspruch 8, wobei die ersten Bitwerte Nullen sind und die zweiten Bitwerte Einsen sind.

10. Verfahren nach Anspruch 8, wobei die weißen Module und die schwarzen Module des datentragenden Bildes in einem ersten Byte des datentragenden Bildes liegen und die ersten und zweiten Bitwerte in einem ersten dekodierten Byte liegen, das dem ersten Byte des datentragenden Bildes entspricht, und, wenn die Anzahl erster Bitwerte im ersten dekodierten Byte kleiner ist als die Anzahl zweiter Bitwerte im ersten dekodierten Byte, ferner umfassend:
Ändern von Bitwerten im zweiten dekodierten Byte, das einem zweiten Byte des datentragenden Bildes entspricht, in Multibit-Codes, welche die ECC-Daten im ersten dekodierten Byte replizieren; und
Modifizieren von Modulen des zweiten Bytes des datentragenden Bildes, so dass die modifizierten Module im zweiten Byte des datentragenden Bildes die Multibit-Codes kodieren, welche die ECC-Daten im ersten dekodierten Byte replizieren.

11. Verfahren nach Anspruch 8, wobei die weißen Module und die schwarzen Module des datentragenden Bildes in einem ersten Byte des datentragenden Bildes liegen und die ersten und zweiten Bitwerte in einem ersten dekodierten Byte liegen, das dem ersten Byte des datentragenden Bildes entspricht, und ferner dann, wenn die Anzahl erster Bitwerte im ersten dekodierten Byte kleiner ist als die Anzahl zweiter Bitwerte im ersten dekodierten Byte und wenn die Anzahl erster Bitwerte im ersten dekodierten Byte nicht ausreicht, um die originalen Daten im ersten dekodierten Byte zu replizieren, Folgendes umfassend:
Ändern der ersten Bitwerte im ersten dekodierten Byte in Multibit-Codes, so dass die Multibit-Codes einen Teil der originalen Daten im dekodierten ersten Byte replizieren, und Modifizieren der weißen Module im ersten Byte des datentragenden Bildes, so dass die modifizierten weißen Module die Multibit-Codes kodieren, die den Teil der originalen Daten im dekodierten ersten Byte replizieren; und
Ändern der ersten Bitwerte in einem zweiten dekodierten Byte, das einem zweiten Byte des datentragenden Bildes entspricht, in Multibit-Codes, so dass die Multibit-Codes einen übrigen Teil der originalen Daten im dekodierten ersten Byte replizieren, und Modifizieren von Modulen des zweiten Bytes des datentragenden Bildes, so dass die modifizierten Module im zweiten Byte des datentragenden Bildes die Multibit-Codes kodieren, die den übrigen Teil der originalen Daten im dekodierten ersten Byte replizieren.

12. Computerverwendbares Medium (224), maschinenlesbare Befehle enthaltend, die einen Prozessor (222) so konfigurieren, dass er einem Strichcode-Erzeuger erlaubt, ein Verfahren zum automatischen Modifizieren eines Strichcodes (1A) durchzuführen, wobei das Verfahren umfasst:
Bestimmen einer Anzahl schwarzer Module (110) und einer Anzahl weißer Module (120) des Strichcodes, die verwendet werden, um erste Daten und Zusatzdaten, die den ersten Daten entsprechen, zu kodieren,
wenn die Anzahl weißer Module größer oder gleich der Anzahl schwarzer Module ist, Ändern von zumindest manchen von der Anzahl weißer Module in farbige Module und Kodieren von zumindest manchen von den ersten Daten und zumindest manchen von den Zusatzdaten in den farbigen Modulen; und
wenn die Anzahl weißer Module kleiner ist als die Anzahl schwarzer Module, Ändern von zumindest manchen von der Anzahl weißer Module in farbige Module und Kodieren der ersten Daten in den farbigen Modulen.

13. Computerverwendbares Medium nach Anspruch 12, wobei der Strichcode erste und zweite Bytes umfasst, wobei das erste Byte die Anzahl weißer Module und die Anzahl schwarzer Module umfasst, und ferner umfassend, dass dann, wenn die Anzahl weißer Module im ersten Byte kleiner ist als die Anzahl schwarzer Module im ersten Byte, ein oder mehrere weiße Module im zweiten Byte in farbige Module geändert werden und die Zusatzdaten in den farbigen Modulen im zweiten Byte kodiert werden.

14. Computerverwendbares Medium nach Anspruch 12, wobei der Strichcode erste und zweite Bytes umfasst, wobei das erste Byte die Anzahl weißer Module und die Anzahl schwarzer Module umfasst, und ferner dann, wenn die Anzahl weißer Module im ersten Byte kleiner ist als die Anzahl schwarzer Module im ersten Byte und wenn die Anzahl weißer Module im ersten Byte nicht ausreicht, um alle ersten Daten zu kodieren, wenn alle von der Anzahl weißer Module im ersten Byte modifiziert werden, Folgendes umfassend:
Ändern von allen von der Anzahl weißer Module im ersten Byte in farbige Module und Kodieren eines Teils der ersten Daten in den farbigen Modulen im ersten Byte und
Ändern eines oder mehrerer weißer Module im zweiten Byte in ein oder mehrere farbige Module und Kodieren eines übrigen Teils der ersten Daten in dem einen oder den mehreren farbigen Modulen im zweiten Byte.

## Revendications

1. Procédé de modification automatique d'une image comportant des données (1A) comprenant :
la détermination d'un nombre de modules blancs (120) et d'un nombre de modules noirs (110) de l'image comportant des données utilisés pour encoder des premières données et des données supplémentaires, correspondant aux premières données,
lorsque le nombre de modules blancs est supérieur ou égal au nombre de modules noirs, la modification d'au moins certains parmi le nombre de modules blancs pour encoder au moins certaines des premières données et au moins certaines des données supplémentaires ; et
lorsque le nombre de modules blancs est inférieur au nombre de modules noirs, la modification d'au moins certains parmi le nombre de modules blancs pour encoder les premières données.

2. Procédé selon la revendication 1, dans lequel l'image comportant des données comprend des premier et second octets, le premier octet comprenant le nombre de modules blancs et le nombre de modules noirs, et comprenant en outre, lorsque le nombre de modules blancs dans le premier octet est inférieur au nombre de modules noirs dans le premier octet, la modification d'un ou de plusieurs modules blancs dans le second octet pour encoder les données supplémentaires.

3. Procédé selon la revendication 2, dans lequel les données supplémentaires sont des données de code de correction d'erreur.

4. Procédé selon la revendication 1, dans lequel l'image comportant des données comprend des premier et second octets, le premier octet comprenant le nombre de modules blancs et le nombre de modules noirs, et comprenant en outre, lorsque le nombre de modules blancs dans le premier octet est inférieur au nombre de modules noirs dans le premier octet et lorsque le nombre de modules blancs dans le premier octet est insuffisant pour encoder l'ensemble des premières données lorsque l'ensemble du nombre de modules blancs dans le premier octet sont modifiés, la modification de l'ensemble du nombre de modules blancs dans le premier octet pour encoder une partie des premières données et la modification d'un ou de plusieurs modules blancs dans le second octet pour encoder une partie restante des premières données.

5. Procédé selon la revendication 1, dans lequel la modification d'au moins certains parmi le nombre de modules blancs pour encoder au moins certaines des premières données et au moins certaines des données supplémentaires comprend le changement d'au moins certains parmi le nombre de modules blancs en modules colorés et l'encodage d'au moins certaines des premières données et d'au moins certaines des données supplémentaires dans les modules colorés, et la modification d'au moins certains parmi le nombre de modules blancs pour encoder les premières données comprenant le changement d'au moins certains parmi le nombre de modules blancs en modules colorés et l'encodage des premières données dans les modules colorés.

6. Procédé selon la revendication 5, dans lequel chaque module coloré encode un code à bits multiples et un bit unique, le code à bits multiples étant lisible en lisant le module coloré sur la base de sa couleur et le bit unique étant lisible en lisant le module coloré en tant que module blanc.

7. Procédé selon la revendication 1, dans lequel les premières données et/ou les secondes données sont altérées par cryptage, hachage et/ou brouillage.

8. Procédé de modification automatique d'une image comportant des données comprenant :
le décodage de modules blancs (120) de l'image comportant des données en premières valeurs de bit et
le décodage de modules noirs (110) de l'image comportant des données en secondes valeurs de bit, les premières et secondes valeurs de bit comprenant collectivement des données originales et des données ECC ;
lorsqu'un nombre parmi les premières valeurs de bit est supérieur ou égal à un nombre de secondes valeurs de bit, le changement des premières valeurs de bit en codes à bits multiples qui reproduisent les données originales et les données ECC, et la modification des modules blancs de l'image comportant des données de sorte que les modules blancs modifiés encodent les codes à bits multiples qui reproduisent les données originales et les données ECC ; et
lorsque le nombre de premières valeurs de bit est inférieur au nombre de secondes valeurs de bit, le changement des premières valeurs de bit en codes à bits multiples qui reproduisent les données originales, et la modification des modules blancs de sorte que les modules blancs modifiés encodent les codes à bits multiples qui reproduisent les données originales.

9. Procédé selon la revendication 8, dans lequel les premières valeurs de bit sont égales à zéro et les secondes valeurs de bit sont égales à un.

10. Procédé selon la revendication 8, dans lequel les modules blancs et les modules noirs de l'image comportant des données se trouvent dans un premier octet de l'image comportant des données et les premières et secondes valeurs de bit se trouvent dans un premier octet décodé, correspondant au premier octet de l'image comportant des données, et comprenant en outre, lorsque le nombre de premières valeurs de bit dans le premier octet décodé est inférieur au nombre de secondes valeurs de bit dans le premier octet décodé :
le changement de valeurs de bit dans un second octet décodé, correspondant à un second octet de l'image comportant des données, en codes à bits multiples qui reproduisent les données ECC dans le premier octet décodé ; et
la modification de modules du second octet de l'image comportant des données de sorte que les modules modifiés dans le second octet de l'image comportant des données encodent les codes à bits multiples qui reproduisent les données ECC dans le premier octet décodé.

11. Procédé selon la revendication 8, dans lequel les modules blancs et les modules noirs de l'image comportant des données se trouvent dans un premier octet de l'image comportant des données et les premières et secondes valeurs de bit se trouvent dans un premier octet décodé, correspondant au premier octet de l'image comportant des données, et comprenant en outre, lorsque le nombre de premières valeurs de bit dans le premier octet décodé est inférieur au nombre de secondes valeurs de bit dans le premier octet décodé et lorsque le nombre de premières valeurs de bit dans le premier octet décodé est insuffisant pour reproduire les données originales dans le premier octet décodé :
le changement des premières valeurs de bit dans le premier octet décodé en codes à bits multiples de sorte que les codes à bits multiples reproduisent une partie des données originales dans le premier octet décodé, et la modification des modules blancs dans le premier octet de l'image comportant des données de sorte que les modules blancs modifiés encodent les codes à bits multiples qui reproduisent la partie des données originales dans le premier octet décodé ; et
le changement des premières valeurs de bit dans un second octet décodé, correspondant à un second octet de l'image comportant des données, en codes à bits multiples de sorte que les codes à bits multiples reproduisent un reste des données originales dans le premier octet décodé, et la modification de modules du second octet de l'image comportant des données de sorte que les modules modifiés dans le second octet de l'image comportant des données encodent les codes à bits multiples qui reproduisent le reste des données originales dans le premier octet décodé.

12. Support utilisable par ordinateur (224) contenant des instructions lisibles par machine qui configurent un processeur (222) pour permettre à un générateur de code à barres de réaliser un procédé de modification automatique d'un code à barres (1A), le procédé comprenant :
la détermination d'un nombre de modules noirs (110) et d'un nombre de modules blancs (120) du code à barres utilisés pour encoder des premières données et des données supplémentaires, correspondant aux premières données ;
lorsque le nombre de modules blancs est supérieur ou égal au nombre de modules noirs, le changement d'au moins certains parmi le nombre de modules blancs en modules colorés et l'encodage d'au moins certaines des premières données et d'au moins certaines des données supplémentaires dans les modules colorés ; et
lorsque le nombre de modules blancs est inférieur au nombre de modules noirs, le changement d'au moins certains parmi le nombre de modules blancs en modules colorés et l'encodage des premières données dans les modules colorés.

13. Support utilisable par ordinateur selon la revendication 12, dans lequel le code à barres comprend des premier et second octets, le premier octet comprenant le nombre de modules blancs et le nombre de modules noirs, et comprenant en outre, lorsque le nombre de modules blancs dans le premier octet est inférieur au nombre de modules noirs dans le premier octet, le changement d'un ou de plusieurs modules blancs dans le second octet en modules colorés et l'encodage des données supplémentaires dans les modules colorés dans le second octet.

14. Support utilisable par ordinateur selon la revendication 12, dans lequel le code à barres comprend des premier et second octets, le premier octet comprenant le nombre de modules blancs et le nombre de modules noirs, et comprenant en outre, lorsque le nombre de modules blancs dans le premier octet est inférieur au nombre de modules noirs dans le premier octet et lorsque le nombre de modules blancs dans le premier octet est insuffisant pour encoder l'ensemble des premières données lorsque l'ensemble du nombre de modules blancs dans le premier octet sont changés en modules colorés :
le changement de l'ensemble du nombre de modules blancs dans le premier octet en modules colorés, et l'encodage d'une partie des premières données dans les modules colorés dans le premier octet ; et
le changement d'un ou de plusieurs modules blancs dans le second octet en un ou plusieurs modules colorés, et l'encodage d'une partie restante des premières données dans les un ou plusieurs modules colorés dans le second octet.
